Europäisches Patentamt

(19) European Patent Office

Office européen des brevets

(11) Publication number: **0 203 236**
**A1**

(12) # EUROPEAN PATENT APPLICATION

(21) Application number: **85306105.9**

(22) Date of filing: **29.08.85**

(51) Int. Cl.⁴: **F 16 H 55/48,** F 16 H 55/36

---

(30) Priority: **06.05.85 US 730508**

(43) Date of publication of application: **03.12.86**
**Bulletin 86/49**

(84) Designated Contracting States: **DE FR GB IT**

(71) Applicant: **The Laitram Corporation, 220 Laitram Lane, Harahan Louisiana 70123 (US)**

(72) Inventor: **Lapeyre, James M., 13 Richmond Place, New Orleans Louisiana 70115 (US)**

(74) Representative: **Arthur, John William et al, FITZPATRICKS 4 West Regent Street, Glasgow G2 1RS Scotland (GB)**

---

(54) **Castellated sheave, mould and process for manufacturing.**

(57) A sheave for transmitting power to or from a cooperating belt, and a method for injection moulding the sheave is disclosed. The sheave comprises a disk-shaped body member (22) having a longitudinal axis (38), and a rim (26) which define a circumferential base surface (40). A first array and a second array of nonoverlapping or staggered wedge-shaped segments are formed integrally with the rim (26) and extend radially from the circumferential base surface (40). In addition to being staggered, the first and second array of segments are axially spaced from each other thereby forming a circumferential groove for receiving a cooperating transmission belt.

CASTELLATED SHEAVE, MOULD AND PROCESS FOR
MANUFACTURING

This invention relates to sheaves, and a mould and a process for the production and fabrication of sheaves, and more particularly to castellated sheaves and a two-piece mould for forming such sheaves, which open by relative movement of one piece with respect to the other along a predetermined axis. The mould and the process as described herein, results in an integrally formed castellated sheave which is preferably moulded of a material such as various plastics, hard rubber and the like. The castellated sheave which is produced by the mould and process of this invention includes a cylindrical or disk-shaped body member having a longitudinal axis, wherein rotation of the sheave takes place around the longitudinal axis. A first and second array of segments extend radially from the circumferential surface of the cylindrical shaped member to define a circumferential groove or trough for receiving a belt. The non-overlapping and integrally moulded spaced arrangement of these first and second arrays around the cylindrical base member forms the castellated appearance of the sheave.

As will be appreciated by those skilled in the art, sheaves which work in combination with a flexible belt are well known and used extensively in the mechanical arts. However, the use and advantages of castellated sheaves is not believed to be known, and certainly a mould and moulding process for manufacturing such castellated sheaves as a unitary plastic device is not known. In the prior art, plastic sheaves were either moulded by forming two disk-shaped sections which were then joined and bonded axially, or the sheave was formed as a unitary unit by two moulded halves which opened in a direction perpendicular to the axis of the sheave and each of which formed a semicircular portion or 180° of the sheave. Simple axial opening moulds which form the complete sheave have not been possible heretofore because of the circumferential belt trough or groove which must be formed.

As is known in the art, the circumferential (typically "V" or trapezoidal shaped) grooves must be deep enough so that the belt cannot bottom out. Otherwise the belt will slip in the groove. It is important to note that such "V" shaped belts are totally dependent on the frictional contact between the sides of the belt and the sides of the "V" groove.

Therefore it is an object of this invention to provide a sheave which can transmit the normal forces between the sheave and a cooperating belt greater than the forces transmitted by a normal frictional contact.

It is also an object of this invention to provide a sheave which does not become substantially inoperative if the cooperating belt "bottoms out" in the "V groove".

It is a further object of this invention to provide a sheave which can be manufactured as a unitary item in a simple axially opening mould by injection moulding.

It is still another object of the present invention to provide a mould and process for forming castellated sheaves integrally formed with a hub member which defines an aperture therethrough.

It is also an object of the present invention to provide a mould and moulding process for forming a castellated sheave wherein first and second arrays of segments extend radially from, and around the circumferential surface of a base member.

Other objects and advantages will be obvious, and will in part appear hereinafter, and will be accomplished by the present invention which provides a reusable mould and moulding process for integrally forming a unique castellated sheave from a selected material. The formed castellated sheave includes a disk-shaped or cylindrical base member having a longitudinal rotational axis, and the disk-shaped base member is integrally joined with first and second arrays of segments. Each of the segments of the first and second arrays extend radially from the cylindrical member and in combination form a circumferential groove or trough around the cylindrical base member. The reusable mould operates or opens along a centre axis corresponding to the longitudinal rotational axis. A first section forms a portion of the disk-shaped or cylindrical member of the sheave, and further defines the outside surfaces of half of the castellating segments and the inside surfaces of the other half of segments. These segments are disposed coaxially around the centre of rotational axis and extend radially from the cylindrical surface of the base member. A second section of the mould similar to the first section, which is adapted for reciprocating movement along the centre axis between an open and close position with respect to the first section also forms a portion of the sheave base member as well as the surfaces of the castellated segments not formed by the first mould sections. Thus, the two sections of the mould cooperate such that when they are in a closed position, the sections define in combination a substantially enclosed cavity corresponding to the desired castellated sheave.

In addition, at least one of the first and second sections define a sprue, gate or port which extends from the enclosed cavity to the outside of the mould such that moulding material may be transferred to the inside of the mould to fill the cavity and form the castellated sheave.  In operation, the two sections open and close by axial movement with respect to each other such that the castellated sheave formed in the cavity may be removed by moving at least one of the sections along the centre axis to the open position.

In a preferred embodiment, the mould further includes means for receiving and supporting a central hub member made of another material such as metal which is positioned coaxially, with the centre axis and has a selected cross-section which is smaller than the diameter of the cylindrical surface of the base member. Typically, the central hub member extends the full longitudinal distance of the sheave such that when the moulded sheave is removed from the mould, an aperture extends completely through, and coaxially with the rotation axis of the sheave.

Also in another preferred embodiment (normally for slow rotational speed applications), the defined aperture through the cylindrical base member is non-circular and may preferably be square or hexagonal in shape.

Embodiments of the invention will be described by way of example only with reference to the accompanying drawings in which:

Fig 1 is a perspective view of a castellated sheave incorporating the teachings of this invention.

Fig 2 is a side view of the castellated sheave of Fig 1 and further includes a flexible "V" belt cooperating therewith.

Fig 2A is a cross-section of the castellated sheave and belt of Fig 2.

Fig 2B is top view of the castellated sheave and belt of Fig 2 and shows deformation of the V belt as it rides between the segments forming the belt trough.

Fig 2C and 2D show alternate embodiments of castellations.

Fig 3 shows an alternate embodiment of a castellated sheave similar to Fig 1, but includes a metal hub.

Fig 4 is a cross-section of the sheave of Fig 3 showing details of the metal hub and method of using an angled set-screw to hold the key in position.

Fig 5 shows a perspective view of an injection mould suitable for forming the castellated sheave of Fig 1.

Figs 6A and 6B show a side view of the mould of Fig 5B in the open and closed positions respectively.

Fig 7 discloses a block flow diagram showing the method of this invention and using a mould of this invention.

Fig 8 is an alternate embodiment of the sheave of Fig 1 showing a square hub or axial opening.

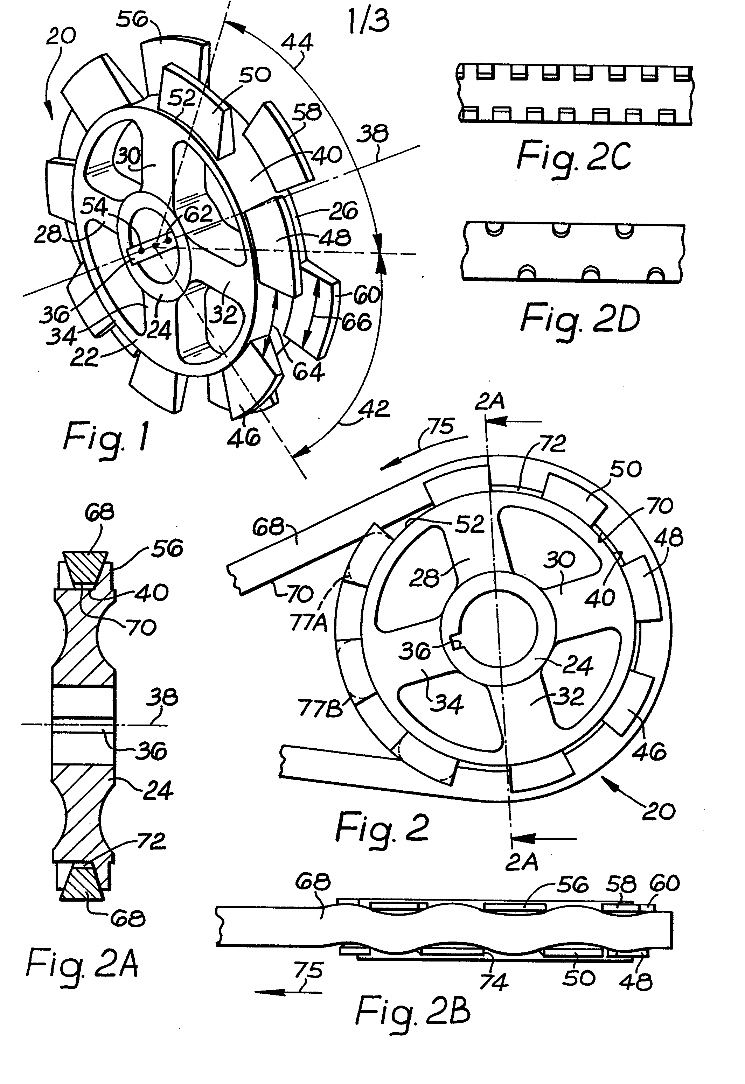

Referring now to Fig 1, there is shown generally at 20 a perspective view of a castellated sheave incorporating the teachings of this invention. As shown, sheave 20 includes a substantially disk-shaped body member 22 having a central hub portion 24 and a rim portion 26. Although the disk-shaped body member 22 could be substantially solid, the embodiment shown in Fig 1 includes four spoke members 28, 30, 32 and 34 which support the rim portion 26 with respect to the hub 24. It will further be appreciated of course that for purposes of added strength and ease in forming moulds that the number of spokes could be greater or smaller than the four spokes shown in Fig 1. In one preferred embodiment, hub 24 defines a circular aperture with a key-way 36 formed therein. As will be discussed in more detail hereinafter, the aperture formed by hub 24 is suitable for receiving a circular shaft of approximately the same diameter in combination with a key-way and key (not shown). It will also be appreciated that the disk-shaped body 22 and the sheave 20 in general has a longitudinal axis 38 on which the sheave rotates. Of course, when a drive shaft and key-way are used with the sheave 20, the rotational axis of the sheave and the longitudinal axis of the drive shaft will be coaxial. Rim portion 26 which is supported by the spokes 28, 30, 32 and 34 defines an outside or circumferential base surface 40 with which there is integrally formed first and second arrays of wedge-shaped segments. Each of the segments of the first array are angularly spaced one from the other around circumferential base 40 as indicated by arcuate angles 42 and 44 which arcuate angles represent angular spacing between segments 46, 48 and 50. Also as shown, the first array of segments which includes segments 46, 48 and 50 are located near the edge 52 of circumferential base surface 40. That is, the first array of segments are positioned with respect to a selected first location 54 along the longitudinal axis 38.

In a similar manner, the second array of segments which includes segments 56, 58 and 60, are located at a second location 62 along longitudinal axis 38 such the first and second arrays are axially spaced from each other. The segments of the second arrays are also angular spaced one from the other in the same manner as were the segments of the first array. However as will be appreciated from the detailed discussion hereinafter, the size and arrangement of the second array is such that the segments of one array are staggered with respect to the segments of the other array, and in a preferred embodiment suitable for moulding with a simple two piece mould, none of the second array of segments overlap any of the segments in the first array. It is also worthwhile to note that the wedge-shape of the segments of both first and second arrays in the embodiment of Fig 1 results in a circumferential groove having a substantial trapezoidal cross-sectional shape between the first and second arrays. It is this staggered segment arrangement that results in the castellated appearance of the sheave. It will further be appreciated by those skilled in the art that although the segments of both the first and second arrays as shown in Fig 1 are all of substantially the same size such similarity of size is not necessary. It will further be appreciated and shown in detail hereinafter, that although the segments of a first array do not overlap with the segments of a second array, the spacing between segments and the size of the individual segments are substantially the same. However, it will be appreciated, that a sheave incorporating the teachings of this invention can include a spacing between segments as indicated by double headed arrow 64 extending between segments 46 and 48 which is greater than the length of the segment such as indicated by arrow 66 extending across the base of segment 60. ·Similarly, there may be circumstances under which the length 66 of a segment may overlap or be greater than the distance between cooperating segments as indicated by double-headed arrow 64. As will become more clear in detail hereinafter, however, although a castellated sheave incorporating the teachings of this invention may be included wherein the segments of the first array do overlap with segments of the second array, such an embodiment cannot be formed by the preferred moulding technique as also discussed hereinafter.

0203236

-8-

Referring now to Fig 2, there is shown a side view of the sheave of Fig 1 cooperating with a flexible V-belt 68. To avoid confusion, and assist in the understanding of the present invention, those portions of the sheave 20 of Fig 2, which are the same as identical portions of the sheave of Fig 1, will carry common reference numbers. As can be seen in Fig 2, flexible V-belt 68 extends around the circumference of the sheave 20 in the trapezoidal or V-shaped groove formed between the first array of segments which includes segments 46, 48 and 50 and a second array of segments which includes segments 56, 58 and 60 (not shown). As shown in Fig 2 and more particularly in the Fig 2A which is a cross-section of Fig 2, the V-belt 68 has a trapezoidal shape corresponding to the trapezoidal shape of the circumferential groove, but has a larger cross-section such that unless belt 68 deforms as discusses hereinafter the bottom surface 70 of the belt cannot contact the circumferential surface 40. Thus as shown, there is a circumferential gap 72 extending around the sheave between the surface 40 and the bottom 70 of the belt 68. The gap 72 shown in the embodiment of Figs 2 and 2A, is essential to proper operation of prior art sheaves and pulleys and V-belts. However, referring to Fig 2B which is a top view of the V-belt and the sheave combination of Fig 2, the formation of the gap 72 between the bottom 70 of the V-belt 68 and the circumferential surface 40, is not essential for the operation of the sheave of this invention and a V-belt. As can be seen in Fig 2B, the resilience of the flexible V-belt 68 may be designed to allow the belt to take a serpentine shape (exaggerated in Fig 2B) between the alternating or staggered segments such as the serpentine shape shown between segments 56, 50, 58, 48 and 60. Thus, it will appreciated that although even with the sheave of the present invention, it is often desirable that the flexible V-belt 68 does not bottom out or come in contact with the circumferential surface 40, under certain circumstances, driving power may still be maintained between the belt and sheave even when such contact or bottoming out occurs. Furthermore, it will be appreciated by those skilled in the art that by selection of a belt having sufficient flexibility to allow the belt to take such a serpentine shape may well result in greater power transmission qualities than previous sheave and V-belt combinations, whether or not the V-belt 68 bottoms out. It is believed that the serpentine shape and the resulting forces experienced between the belt 68 and the edges of the segments such as edge 74 when the belt moves as indicated by arrow 75 will result in greater power transmission quality than available on present sheaves and V-belt transmission systems.

As shown by dotted lines having reference numbers 77A and 77B in Fig. 2, the outside edge of the castellations may include rounded corners to minimize sharp edges. Also as illustrated in Figs. 2C and 2D, the number and shape of the castellation may be varied as desired. Such castellated shaped may be readily moulded with the moulds and moulding technique taught by the present invention.

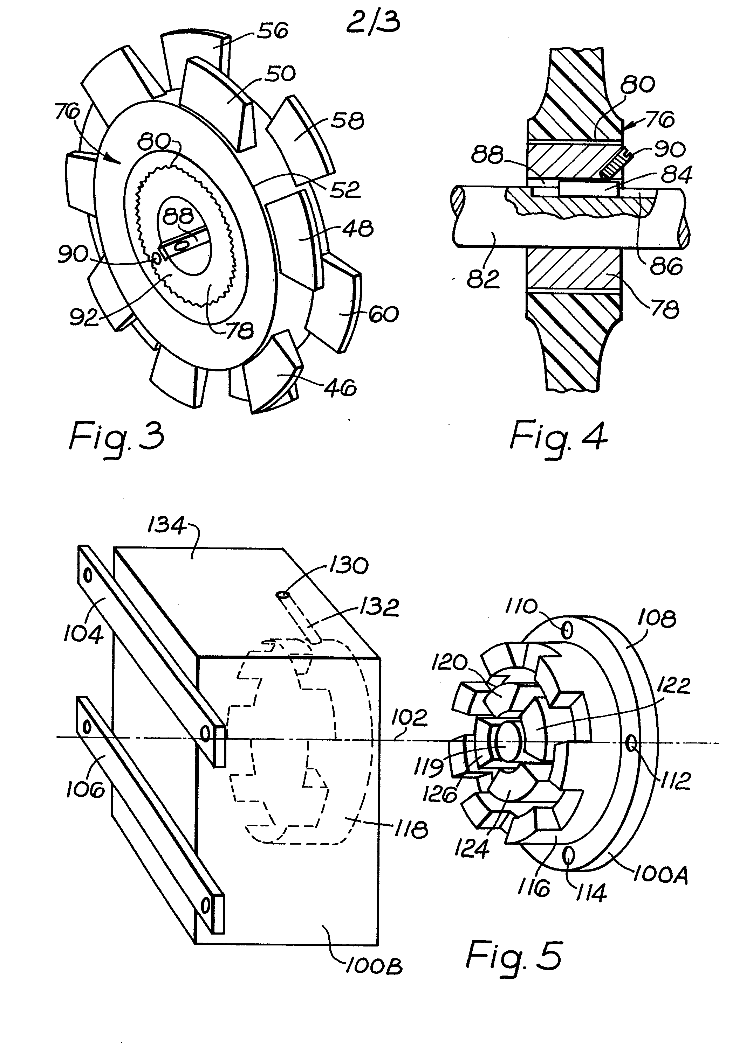

Referring now to Fig. 3, there is shown another embodiment of a castellated sheave incorporating the features of this invention. As shown, the hub area 76 is larger than that shown in the sheave of Fig. 1. According to this embodiment, and as can be more clearly seen in Fig. 4 which is a cross-sectional view of Fig. 3, portion 76 includes a metal hub member 78. Thus in injection-forming the sheave of Fig. 3, the sheave portion is injection moulded around metal hub 78. To increase the bonding strength between the metal hub 78 and the sheave, metal hub 78 includes a serrated surface 80. The sheave of Fig. 3 which includes the metal hub 78 will be found to have particular application with sheaves wherein substantial torque must be transmitted between the sheave and a circular power shaft 82. It will be appreciated by those skilled in the art that a keyway such as keyway 36 of Fig. 1 in an injection moulded plastic sheave for purposes of driving large torques by metal shaft 82 could fail by rounding off of the plastic keyway edges. Thus, the use of a metal hub 78 would overcome this deficiency for sheaves transmitting large torque values. Referring again to Fig. 4, it will be seen that the key 84 setting in keyway 86 of shaft 82 and the keyway 88 of metal hub 78 is held in position by a set-screw 90 which extends from the face 92 of hub 78 to the keyway 86 at an angle. It will be appreciated by those skilled in the art that a set screw for maintaining a key locked in a keyway between a power shaft and a hub, will normally extend along a line perpendicular to the rotational axis of the power shaft. However, it is believed the angular position as shown in this embodiment is superior for plastic sheaves having metal hubs so that none of the bonding surface between the hub and the plastic sheave must be sacrificed to allow for the set-screw.

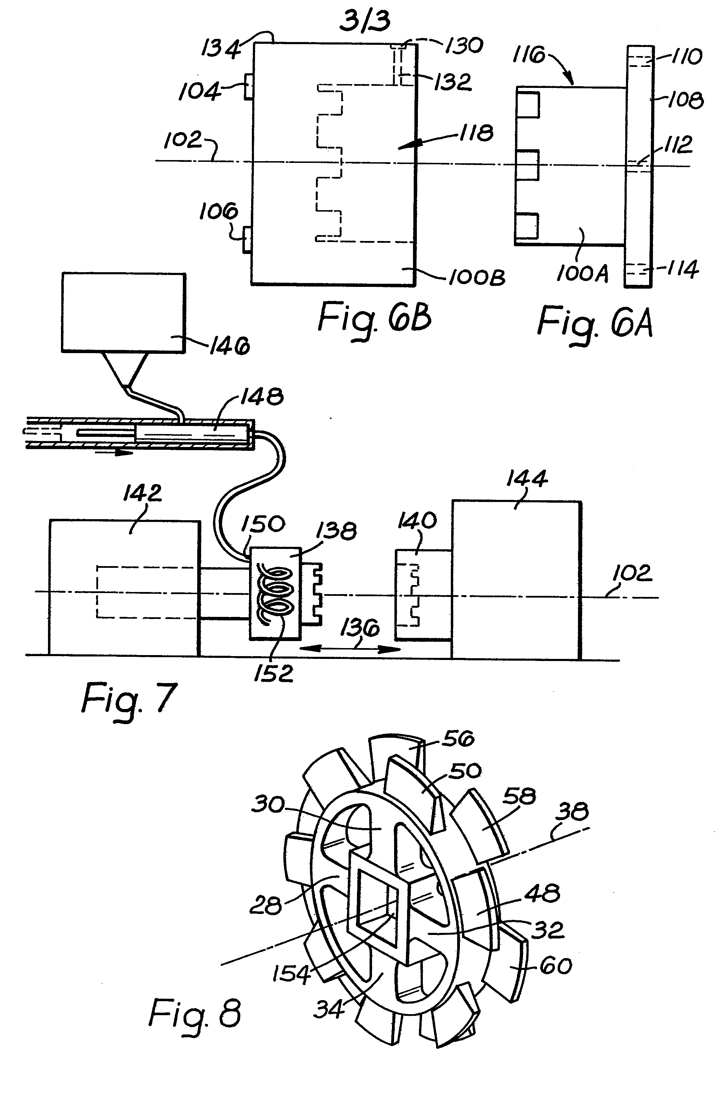

Referring now to Fig. 5, 6A and 6B, there is shown a metal mould suitable for injection moulding the sheave of Fig. 1. As was the case with respect to common portions of the plastic sheaves discussed in the various figures heretofore, common portions of the mould as shown in Figs. 5, 6A and 6B will carry common reference numbers. As shown, the mould of Figs. 5, 6A and 6B include a first mould half 100A and a second mould half 100B. As will be discussed hereinafter, mould halves 100A and 100B will be mounted on a machine such that reciprocating motion along longitudinal axis 102 will allow the mould halves to open and close. Figs. 6A and 6B respectively show the mould halves in the open, position. For purposes of mounting the two mould halves, mould half 100B is shown to include support bars 104 and 106 each of which include mounting holes for mounting to the injection machine. In a somewhat similar manner, mould half 100A includes a flange 108 which itself includes bolt or mounting holes 110,112 and 114. Thus, it will be appreciated that by relative motion between the two mould halves along the longitudinal axis 102, the protruding portion 116 of mould half 100A will be received by the recess 118 in mould half 100B.

As will be appreciated by those skilled in the injection moulding art, and as is shown more clearly in mould half 100A of Fig. 5, the castellated sheave 20 of Fig. 1 may be formed by the mould of Figs. 5, 6A and 6B. In particular, it will be appreciated that mould half 100A forms a portion of the disk-shape or cylindrical member 22 of the sheave and defines the outside surface of a first half of the castellating segments and the inside surface of the other or second half of the segments. In a similar manner, the mould half 100B will define the inside surface of the first half of the castellating segments and the outside surface of the second half of the castellating segments. Further, in the embodiment shown, a circular aperture with keyway 36 will be formed during the injection moulding process by protruding member 119 on mould half 100A. Alternately a protruding member similar to 119 may be used to carry a centre metal hub during moulding for producing sheaves such as shown in Figs. 3 and 4. In a similar manner, the openings or apertures defined between the spokes 28,30, 32 and 34 will be defined by protruding members 120, 122, 124 and 126 respectively. It will also be appreciated and as is more clearly seen in Fig. 6B that the two sections of the mould cooperate such that when they are in the closed position the castellating portions of the two mould halves 100A and 100B are maintained at a selected spacing such that when filled with a selected moulding material they will form a castellated sheave similar to that shown in Fig. 1.

As will be appreciated by those skilled in the art, injection moulding requires some way for the selected material to be moved from outside the mould to the interior cavity of the mould where the item is to be formed. To accomplish this there is shown a gate, port or sprue 130 having a passageway 132 defined in mould half 100B which extends from the top surface 134 of mould half 100B to the interior of the mould and further passageway 132 joins with the internal cavity. Thus, the selected hot liquid or moulding material may be injected from the outside of the mould to completely fill the interior cavity formed by the two halves of the mould when they are in the closed position. Although the sprue 130 and passageway 132 are shown as being totally in mould half 100B, it will be appreciated that this location is indicative only and, therefore, a gate and passageway could alternately also be located in mould half 100A or any other location. To those skilled in the art, it will be appreciated that either a single one of a port or gate, or alternately additional ports may be used in a particular mould depending upon requirements of the mould, such as size, the cooling available, and the type of injection moulding materials used.

Referring now to Fig. 7, there is shown a processing system for manufacturing the castellated sheave of this invention and using the particular mould of this invention. As represented by double-headed arrow 136, the mould halves 138 and 140 are supported by structures 142 and 144 so that the mould halves can be moved to the closed position along the centre axis 102 so that the desired cavity is formed by the two halves as discussed heretofore. The selected material from which the resulting device is made is injected from source 146 by means of piston 148 into the mould through port 150 to the interior of the cavity at a selected temperature and pressure to completely fill the cavity and form the resulting castellated sheave. It will be appreciated that the mould may require additional cooling as indicated by coils 152, and that temperature and pressures at which the selected material is injected into the mould may vary depending upon the material used. Further, although substantially any type of plastics or curing material may be used it is expected that a particularly preferable product may be obtained by using selected thermal materials such as various hard rubbers, polyethylene, polyurethane, polyproplylene and the like. Once the material has been injected and completely fills the cavity, and the material has been allowed to cool and cure to a point where it will retain its desired shape, the two halves of the mould 138 and 140 are then opened with respect to each other along the centre axis 102 and the resulting castellated sheave ejected.

Referring now to Fig. 8 there is shown an alternate embodiment of a castellated sheave of this invention, incorporating the further features of a non-circular or square axial aperture 154 for cooperating with a square drive shaft. As will be appreciated the use of such a non-circular drive aperture, although normally used for slow speed rotational applications, will eliminate the need of keys, keyways and set screws while still permitting positive drive. It will also be appreciated that other non-circular apertures such as hexagon, oval etc. will also allow for positive drive without requiring keys and keyways.

It is also of importance to note and understand that although the previous discussion on injecting molding the castellated sheave of this invention was with respect to a plastic sheave, the alternate castellated sheave having a metal hub may also be formed by placing the desired metal hub into the cavity prior to the injection of the molding material. It will of course be appreciated that the aperture for receiving the power drive shaft must be sealed so that the injection molding material does not also fill the drive aperture. Thus, although there has been described to this point particular embodiments of the mold and process of molding castellated sheaves it is not intended that such specific references be considered as limitations on the invention except insofar as such limitations are included in the following claims.

## CLAIMS

1.  A castellated sheave comprising:
a substantially disk shaped body member including an outside rim and shaft connecting means, and
first and second circumferential arrays of segments axially spaced to form a circumferential drive belt groove, said first and second arrays being integrally formed with said outside rim of said body portion.

2.  A castellated sheave for transmitting power to or from a cooperating belt comprising:
a substantially disk-shaped body member having a longitudinal rotational axis and first and second sides, and defining a circumferential base surface;
a first array of segments having a selected shape molded integral with and extending radially from said circumferential base surface adjacent said first side, and each segment of said first array being angularly spaced one from the other around said circumferential base; and
a second array of segments having said selected shape molded integral with and extending radially from said circumferential base surface adjacent said second side and each of said second array being angularly spaced one from the other around said circumferential base such that said segments of said second array are staggered with respect to said segments of said first array, and such that said selected shape of said first and second array of segments define a circumferential groove of a selected cross-section there-between on said body member to form said castellated sheave.

3.  The castellated sheave of Claims 1 or 2, wherein said body member further defines an aperture extending therethrough along said longitudinal axis for receiving a support shaft.

4. The castellated sheave of Claim 3 wherein said body member and said first and second array of segments are made of a first material and further include a hub member having a first and second face and being made of a second and stronger material, said hub defining an aperture extending therethrough from said first face to said second face along an axis of said hub and said aperture having a selected shape, said hub being rigidly secure to said body member such that said axis of said hub is aligned with said longitudinal rotational axis.

5. The castellated sheave of Claim 3, further including a longitudinal shaft having a cross-section corresponding to the shape of said defined aperture extending therethrough.

6. The castellated sheave of Claim 4, further including a longitudinal shaft having a cross-section corresponding to the shape of said defined aperture extending therethrough.

7. A power transmission system including the castellated sheave of Claim 5 wherein said shaft extending therethrough cannot rotate within said aperture, and further includes a belt having a cross-section at least partially corresponding to said selected cross-section of said circumferential groove, said belt being located in, and extending partially along said circumferential groove.

8. The power transmission system of Claim 7 wherein the selected cross-section is trapezoidal.

9. The castellated sheave of Claim 5 wherein said defined aperture has a square cross-section.

10. The castellated sheave of Claim 5 wherein said defined aperture has a circular cross-section with a keyway.

11.    The castellated sheave of Claim 4 wherein said defined aperture has a circular cross-section with a key-way, and said hub member defines a threaded aperture extending from said first face to said axis of said hub and intersects said key-way.

12.    The castellated sheave of Claims 1 or 2 wherein said staggered first and second array of segments do not overlap.

13.    The castellated sheave of Claims 1 or 2 wherein all of the segments of the first array are of the same size.

14.    The castellated sheave of Claim 13 wherein all of the segments of the second array are of the same size as the segments of the first array.

15.    A reusable mould for forming, from a selected material, a castellated sheave which includes a disk-shaped body member having a longitudinal rotational axis with a circumferential base surface integrally joined with first and second arrays of castellated segments axially spaced on said circumferential base surface and each segment of each of said first and second arrays being angularly spaced one from the other around said circumferential base for defining a belt groove, said mould having a centre axis and comprising:

a first section partial defining a cylindrical shaped portion of a cavity coaxial with said centre axis for forming a portion of said disk-shaped body member of said sheave, said first section further defining a castellated surface on the circumference of said cylindrical portion of said cavity for forming the outside surfaces of said first array of the castellated segments and the inside surfaces of the second array of segments, said castellated surfaces being disposed coaxially around the centre of rotation and extending radially from said circumference;

a second section adopted for reciprocating movement along said centre axis between an open and closed position with respect to said first section, said second section partially defining another cylindrical shaped portion of said cavity for forming the remainder of said disk-shaped body member and also extending along and around said centre axis, said second section further defining other castellated surfaces for forming the inside surfaces of said first array of the castellated segments and the outside surfaces of said second array of said segments, said second array being disposed radially such that they do not overlap with said first array of segments;

said first and second mould sections cooperating such that when in said closed position, said disk forming portions and said castellated segment forming portions of said sections define a substantially enclosed cavity having a substantially disk-shaped body member with said longitudinal rotational axis and a circumferential base surface, and said cavity further having first and second arrays of segments extending radially from said circumferential base surface angularly spaced one from the other around the circumferential base surface, said first and second arrays of segments being in a non-overlapping staggered relationship with each other;

at least one of said first and second sections defining a passageway extending from said enclosed cavity to the outside of said mould such that said selected material may be transferred from outside of said mould to fill said cavity and integrally form said castellated sheave; and

said mould sections further cooperating such that said castellated sheave formed in said cavity may be removed by moving said second section along said centre axis to said open position.

16. The mould of Claim 15 wherein selected material is selected from the group consisting of thermo setting rubber, polyethylene, polypropylene and polyurethane.

17. A method for producing a castellated sheave having a disk-shaped body member with a longitudinal rotational axis and first and second sides, and defining a circumferential base surface, a first array of segments of a selected shape moulded integrally with and extending radially from the circumferential base surface of said disk-shaped body member adjacent said first side, and angularly spaced one from the other around said circumferential base surface, and a second array of segments of said selected shape moulded integrally with and extending radially from said circumferential base surface adjacent said second side, and angularly spaced one from the other around said circumferential base surface such that said segments of said second array do not overlap with said segments of said first array and such that said selected shape of said first and second array of segments define a circumferential groove of a selected cross-section therebetween on said body member, said method comprising the steps of:

providing a reusable mould having first and second sections wherein each of said sections include a centre axis coaligned with said longitudinal rotational axis such that said two sections are adapted for reciprocating movement with respect to each other between an open and closed position along said centre axis, each of said first and second sections partially defining a cavity portion extending along and around said centre axis for forming a portion of said disk-shaped body member, and each section further defining castellated surfaces disposed coaxially around said centre axis extending radially from said centre axis said castellated surfaces of said first section for forming the outside surfaces of said first array of segments and the inside surfaces of said second array of segments, and said castellated surfaces of said second section for forming said inside surfaces of said first array and said outside surface of said second array such that none of said segments overlap;

supporting said first and second sections such that said centre axis of each section are parallel and in register;

moving at least one of said first and second sections with respect to the other section along said coaxially aligned centre axis to said closed position such that said sections define a substantially enclosed cavity having a disk-shaped portion integrally formed with castellated portion extending from the circumferential surface of said disk-shaped portion;

injecting an amount of selected material at a selected temperature and pressure into said enclosed cavity through a gate extending from a source outside of said cavity sufficient to fill said closed cavity;

subjecting said first and second sections, to a selected amount of force parallel to said aligned centre axis to maintain said sections in said closed position during said injection of said selected material;

curing said injected material to form a castellated sheave conforming to said cavity;

moving at least one of said sections along centre axis to said open position; and

removing said formed castellated sheave from said mould.

Fig. 1

Fig. 2A

Fig. 2

Fig. 2B

Fig. 2C

Fig. 2D

Fig. 3

Fig. 4

Fig. 5

Fig. 6B

Fig. 6A

Fig. 7

Fig. 8

**EUROPEAN SEARCH REPORT**

European Patent
Office

## DOCUMENTS CONSIDERED TO BE RELEVANT

| Category | Citation of document with indication. where appropriate, of relevant passages | Relevant to claim | CLASSIFICATION OF THE APPLICATION (Int Cl.4) |
|---|---|---|---|
| X | FR-A- 990 596 (G.-L.-E. GUILBERT) <br><br> * complete document * <br><br> --- | 1,2,12 -14,15 ,17 | F 16 H 55/48 <br> F 16 H 55/36 |
| A | FR-A-2 520 466 (PAUMELLERIE ELECTRIQUE) <br><br> * page 2, line 15 - page 3, line 20; figures 1, 2 * <br><br> --- | 1-3,5, 12-14, 15,17 | |
| A | FR-A-2 257 050 (CHRYSLER FRANCE) <br><br> * page 1, line 14 - page 2, line 33; figures 2-6 * <br><br> --- | 1,3-8, 10,12- 14 | |
| A | US-A-3 763 714 (KAHMANN) <br><br> * complete document * <br><br> --- | 1,3-8, 12-14 | **TECHNICAL FIELDS SEARCHED (Int. Cl.4)** <br><br> F 16 H 55/00 <br> B 29 D 15/00 |
| A | GB-A-1 370 428 (THE DAVALL GEAR CO.) <br> * complete document * <br><br> --- | 4,11, 15,17 | |
| A | FR-A-1 595 346 (ILLINOIS TOOL WORKS) <br> * abstract; lines 21-24 * <br><br> ----- | 16 | |

The present search report has been drawn up for all claims

| Place of search | Date of completion of the search | Examiner |
|---|---|---|
| BERLIN | 30-07-1986 | LEMBLE Y.A.F.M. |